# EUROPÄISCHE PATENTSCHRIFT

(11) **EP 2 728 300 B1**
(45) Veröffentlichungstag und Bekanntmachung des Hinweises auf die Patenterteilung: **23.03.2016**
(21) Anmeldenummer: 12190738.0
(22) Anmeldetag: 31.10.2012
(51) Int. Cl.: G01B 1/00, G01B 5/012, G01B 7/012

(54) **Taster**
Sensor
Palpeur

(43) Veröffentlichungstag der Anmeldung: 07.05.2014
(73) Patentinhaber: Diamaze Coating Technology GmbH, 89081 Ulm (DE)
(72) Erfinder: Gluche, Peter, 89287 Bellenberg (DE); Wiora, Matthias, 89134 Blaustein (DE); Janssen, Ton, 5854 GA Nieuw Bergen (NL)
(74) Vertreter: Pfenning, Meinig & Partner mbB

(56) Entgegenhaltungen:
- EP-A1- 2 495 080
- US-A1- 2010 064 538
- US-A1- 2012 263 909
- R. MORRELL ET AL.: INT. JOURNAL OF REFRACTORY METALS & HARD MATERIALS, Bd. 28, 2010, Seiten 508-515, XP002694909,

## Beschreibung

Die Erfindung betrifft einen Taster zum Vermessen von Bauteilen umfassend einen mit einem Grundkörper verbundenen Prüfkörper, wobei sich der Prüfkörper dadurch auszeichnet, dass mind. diejenige Oberfläche des Prüfkörpers die mit dem zu vermessenden Bauteil in Kontakt bringbar ist, mit einer kristallinen Diamantschicht versehen ist, wobei die Diamantschicht sich dadurch auszeichnet, dass sie eine feinkristalline Diamantstruktur besitzt und die kristallinen Domänen eine mittlere Korngröße von d₅₀ ≤ 100 nm aufweist.

Taster für das Vermessen von Bauteilen aus harten oder beschichteten Werkstoffen, z.B. in Koordinatenmessgeräten (KMG) bestehend aus einem Grundkörper, einem Schaft und einen mit dem Schaft verbundenen Prüfkörper sind bekannt. So beschreibt z.B. die DE 10 2009 055 651 A1 einen Taster, bei dem der Prüfkörper in Form einer Kugel ausgebildet ist und die Kugel sich dadurch auszeichnet, dass die Oberfläche der Kugel ein Beschichtungsmaterial aufweist, dass aus einem Hartmetall oder aus kristallinem Kohlstoff bestehen kann.

Zur Ausbildung Struktur und Morphologie der kristallinen Diamantschicht wird allerdings in der DE 10 2009 055 651 A1 nichts ausgesagt.

US 2010/0064538 offenbart einen Taster mit einem Tastkopf, wobei der Tastkopf mit einer kristallinen Diamantschicht versehen ist.

Weiterhin ist von der Firma Diamond Product Solutions ebenfalls ein Taster bekannt, der als Prüfkörper eine Kugel aufweist, die eine nano- oder mikrokristalline Diamantschicht besitzt (www.diamondproductsolutions.nl).

An derartige Kugeln, die mit einer polykristallinen Diamantschicht beschichtet sind, werden allerdings im Falle von Tastern hohe Anforderungen gestellt. Die Kugel wirkt als Prüfkörper und ist einer Punktbelastung ausgesetzt. Obwohl polykristallinen Diamantschichten eine hohe Härte und eine gute Korrosionsbeständigkeit aufweisen, kann im Dauerbetrieb nicht verhindert werden, dass aufgrund der Sprödheit (Bruchspannung) und der hohen Formstabilität (Emodul) der Diamantschicht es zu Problemen mit der Formstabilität der Diamantschicht, wie auch zu einer Delamination der polykristallinen Diamantschicht, kommen kann. Dies führt dann dazu, dass keine reproduzierbaren, verlässlichen Messwerte erhalten werden können.

Ausgehend hiervon ist es Aufgabe der vorliegenden Erfindung, einen Taster mit einem verbesserten Prüfkörpers vorzuschlagen, der gegenüber dem Stand der Technik eine verbesserte Formstabilität aufweist und bei der auch keine Delamination der Beschichtung auftreten soll, der Prüfkörper mithin also zuverlässiger arbeitet.

Die Aufgabe wird durch die Merkmale des Patentanspruchs 1 gelöst. Die Unteransprüche zeigen vorteilhafte Weiterbildungen auf.

Erfindungsgemäß wird somit vorgeschlagen, den Prüfkörper eines Tasters, mind. an derjenigen Oberfläche des Prüfkörpers, die mit dem zu vermessenden Bauteil in Kontakt bringbar sind, mit einer kristallinen Diamantschicht zu versehen, wobei als erfindungswesentliches Merkmal die Diamantschicht als feinkristalline Diamantstruktur ausgebildet ist und die kristallinen Domänen eine mittlere Korngröße von d₅₀ ≤ 100 nm aufweisen. Dadurch entsteht eine Diamantschicht, bei der die Kristallite im Wesentlichen homogen in der ange-gebenen Größenordnung, in der Diamantschicht angeordnet sind. Dies hat gegenüber den Diamantschichten des Standes der Technik den entscheidenden Vorteil, dass die Eigenschaften der Diamantschicht, zumindest in Wachstumsrichtung der Diamantschicht, isotrop sind. Bei den Diamantschichten des Standes der Technik bilden sich aufgrund der Abscheidungsbedingen ausgehend vom Substrat Kristallite mit unterschiedlicher Korngröße aus, wobei die Korngröße am Wachstumssubstrat meist klein und die an der Wachstumsoberfläche größer ist. Hieraus resultiert eine heterogene Schichtmorphologie, welche sich in Wachstumsrichtung bezüglich lhrer Materialeigenschaften ändert. Der heterogene Aufbau der Schicht bedingt auch das auftreten von mechanischen, Spannungen (meist Zugspannung) innerhalb der Diamantschicht; welche sowohl das Interface zum Substrat belasten, als auch die Bruchgrenze des Materials negativ beeinflussen. Bei den bekannten Diamantschichten beobachtet man ferner Korngrenzen, welche sich u.a. durch die gesamte Diamantschicht in Wachstumsrichtung erstrecken und welche besonders bei Punktbeanspruchung dann als Ausgangspunkt für die Entstehung von Rissen und Brüchen verantwortlich sind. Die Folge von Rissen bzw. Brüchen der Diamantschicht ist zumindest eine lokale Delamination der Diamantschicht und der damit einhergehende Formfehler der Kugeloberfläche.

Die nanokristalline Diamantschicht der Erfindung zeichnet sich nun dadurch aus, dass sie ein E-Modul von < 850 GPa besitzt. Polykristalline Diamantschichten des Standes der Technik besitzen normalweiser ein E-Modul im Bereich von >1000 GPa.

Einhergehend mit der Reduktion der mittleren Korngröße, und der damit verbundenen Erhöhung des relativen Korngrenzenvolumens, erhöht sich auch der Anteil an sp bzw. sp² Bindungen in der Diamantschicht. Bei den hier verwendeten diamantschichten beträgt der Anteil an sp- und sp²-Bindungen der feinkristallinen Diamantschicht zwischen 0,5 und 10 %, bevorzugt zwischen 2 und 9 %, besonders bevorzugt zwischen 3 und 8 %.

Gemäß der Erfindung ist es weiterhin günstig, wenn die Kristallite der feinkristallinen Diamantschicht bevorzugt in <100>-, <110>- und/oder <111>-Richtung aufgewachsen sind, d.h. eine Textur vorliegt. Dies kann aus dem Herstellungsprozess resultieren, bei dem die Wachstumsgeschwindigkeit bestimmter Kristallrichtungen gezielt bevorzugt werden kann. Diese anisotrope Textur der Kristallite beeinflusst die mechanischen Eigenschaften ebenso positiv.

Die Verwendung von feinkristallinen Diamantschichten mit den wie vorstehend angegebenen Korngrößen führt dazu, dass auch das E-Modul gegenüber polykristallinen Diamantschichten deutlich erniedrigt wird, so dass eine bessere Anpassung an das E-Modul des Substrates gewährleistet ist. So weisen polykristalline Diamantschichten meist ein E-Modul von > 1000 GPa auf. Typische Substratmaterialien, wie beispielsweise Silizium oder Siliziumdioxid, besitzen einen deutlich geringeren E-Modul von etwa 90 bis 400 GPa. Der große Unterschied der Biegesteifigkeit zwischen Substrat und Beschichtung führt im mechanischen Belastungsfall zu einer starken Belastung des Interfaces, welches im schlimmsten Fall versagen kann und damit zu einer Delamination der Diamantschicht führen kann. Letzteres hat das Totalversagen des Bauteils zur Folge. Aus diesem Grund ist eine Angleichung der Biegesteifigkeit von Substrat und Beschichtung vorteilhaft. Dies kann nun ebenfalls durch eine Verringerung der Korngröße erreicht werden. Da mit abnehmender Korngröße der Diamantschicht das Korngrenzenvolumen im Verhältnis zum Kristallvolumen (Kornvolumen) zunimmt und an der Korngrenze in der Regel schwächere Bindungen als im Kristall (Korn) vorhanden sind, korreliert das makroskopisch ermittelte E-Modul diametral mit der mittleren Korngröße. Typische Werte für das E-Modul von nanokristallinen Diamantschichten (Korngröße etwa 10 nm) liegen im Bereich von < 850 GPa und ganz besonders bevorzugt < 700 GPa.

Dadurch, dass ein kleineres E-Modul realisiert worden ist, entsteht eine "elastischere" Diamantschicht, die eine Deformation des Prüfkörpers besser aufnehmen kann, und der Delamination der Diamantschicht zusätzlich entgegen wirkt. Es besteht somit ein Zusammenhang zwischen der Korngröße der Kristallite und den physikalischen Eigenschaften wie dem E-Modul und auch der Bruchspannung. Hierbei nimmt das E-modul mit abnehmender mittlerer Korngröße ab, die Biegebruchspannung hingegen mit abnehmender mittlerer Korngröße zu.

Im Gegensatz zu polykristallinen Diamantschichten sind die einzelnen Körner im Falle von nanokristallinen Diamantschichten wie vorstehend erläutert sehr klein. Eine Korngrenze, welche generell eine Schwachstelle des Materials darstellt, hat damit ebenfalls sehr geringe Abmessungen, insbesondere, wenn man das Verhältnis der Korngrenzenausdehnung zur Schichtdicke der Diamantschicht betrachtet. Im Gegensatz zu polykristallinem Diamant, bei dem die Korngrenzen meist kolumnar durch die gesamte Schicht hindurch verlaufen, stellt die Korngrenze im feinkristallinen Diamant keine mikroskopische Solbruchstelle mehr dar und die makroskopisch ermittelten Biegebruchspannungen σ₀ derartiger feinkristallliner Diamantschichten sind damit im Vergleich zu polykristallinen Diamantschichten sehr hoch. Typische Werte liegen bei > 2 GPa, bevorzugt > 4 GPa und besonders bevorzugt > 5 Pa.

Bezüglich der Definition der Biegebruchspannung wird auf die folgenden Literaturstellen verwiesen:
- R. Morrell et al., Int. Journal of Refractory Metals & Hard Materials, 28 (2010), S. 508-515;
- R. Danzer et al. in "Technische keramische Werkstoffe", herausgegeben von J. Kriegesmann, HvB Verlag, Ellerau, ISBN 978-3-938595-00-8, Kapitel 6.2.3.1- Der 4-Kugelversuch zur Ermittlung der biaxialen Biegefestigkeit spröder Werkstoffe".

Die erfindungsgemäßen Prüfkörper weisen somit eine Diamantschicht auf, die im Bezug auf ihre Biegebruchspannung bessere Werte, nämlich > 2 GPa, in Bezug zu einer nanokristallinen Diamantschicht des Standes der Technik aufweist und in Bezug auf das E-Modul kleinere Werte als im Stand der Technik, so dass dadurch eine Diamantschicht gebildet wird, die ausgezeichnet für die Anwendungen bei hoher mechanischen Beanspruchung auf elastischeren Substraten geeignet ist. Dadurch, dass zusätzlich aufgrund der kleinen Korngrößen eine im Wesentlichen homogene Verteilung der kristallinen Domänen erreicht wird, sind die makroskopischen Eigenschaften der feinkristallinen Diamantschicht nahezu unabhängig von der Orientierung, d.h. nahezu isotrop.

Die feinkristalline Diamantschicht mit kristallinen Domänen mit einer mittleren Korngröße von d₅₀ zwischen 1 nm und 100 nm wirkt sich zudem vorteilhaft auf die Oberflächenrauigkeit aus, da diese ebenfalls mit abnehmender Korngröße abnimmt. Durch diese geringere Rauheit wird auch vermieden, dass sich Material des Prüflings auf der Kugeloberfläche ablagert (sogenannte Aufschmierung). Selbstverständlich kann die Oberfläche der feinkristallinen Diamantschicht auch noch durch eine nachgelagerte Politur mechanisch weiter verbessert werden, zum Beispiel durch mechanisches Gleit- oder Schleppschleifen. Auch ein Ultraschall- unterstützendes Schleifen in abrasiven Suspensionen aus Diamantpartikeln oder keramischen Schleifmitteln wie zum Beispiel Al₂O₃ oder SiC oder ähnlichen, Plasmapolituren in Sauerstoff und oder Chlor- und oder fluorhaltigen Plasmen und / oder Ionen unterstützen Bearbeitungsfritten wie RIE (Reaktive Ion Etching), Ion Milling, oder anderen lonenstrahl- unterstützte Verfahren sind möglich. Auch ist ein Bearbeiten durch Drehen der Kugel zwischen zwei Schleifscheiben denkbar. Darüber hinaus kann auch eine rotierende zylindrische Schleifscheibe aus Diamant oder PKD (polykristalliner Diamant), deren Innendurchmesser kleiner ist, als der der zu polierenden Kugel ist, eingesetzt werden. Die Kugel wird dabei zusätzlich noch relativ zur Rotationsachse der zylindrischen Schleifscheibe gedreht. Erfindungsgemäß beträgt die obere Flächenrauheit RMS < 50 nm, bevorzugt < 10 nm ganz besonders bevorzugt < 2 nm. Unter Oberflächenrauheit RMS wird die quadratische Rauheit verstanden, die aus dem Mittelwert der Abweichungsquadrate berechnet wird. Diese Oberflächenrauheit RMS entspricht somit dem quadratischen Mittel.

Bei der Erfindung ist es daher besonders bevorzugt, wenn die kristallinen Domänen eine mittlere Korngröße d₅₀ ≤ 50 nm, besonders bevorzugt von d₅₀ ≤ 10 nm aufweisen. Bei der Biegebruchspannung sind Werte von > 4,0 GPa und beim E-Modul Werte von < 700 GPa bevorzugt. Die Rauheit RMS ist bevorzugt < 10 nm, besonders bevorzugt < 2 nm bis 1 nm.

Eine weitere bevorzugte Ausführungsform sieht vor, dass das E-Modul der nanokristallinen Diamantschicht an das E-Modul des Materials des Prüfkörpers (Substratmaterial) angepasst wird. Die Anpassung erfolgt wiederum über die Abscheideparameter der Diamantschicht, welche in wesentlichen die Korngröße beeinflussen. Grundsätzlich sind hierbei Ausführungsformen bevorzugt, bei denen das Verhältnis des E-Moduls der feinkristallinen Diamantschicht zum E-Modul des Materials des Prüfkörpers möglichst klein ist. Bevorzugt ist das E-Modul in GPa der feinkristallinen Diamantschicht maximal um den Faktor 4, bevorzugt maximal um den Faktor 3, besonders bevorzugt maximal um den Faktor 2, größer als das E-Modul in GPa des Prüfkörpers. Auch diese Maßnahme trägt dazu bei, dass die mechanischen Eigenschaften verbessert und damit die Zuverlässigkeit des Systems erhöht werden. Die kleinere Differenz zwischen dem E-Modul der Diamantschicht und dem E-Modul des Materials des Prüfkörpers reduziert insbesondere die Wahrscheinlichkeit der Delamination der Diamantschicht vom Material des Prüfkörpers, da unter äußerer Belastung die am Interface zwischen Prüfkörper und Diamantschicht auftretende mechanische Spannung minimiert wird.

Als Material für den Prüfkörper kommt hierbei besonders bevorzugt Si, Si₃N₄, SiC, SiO₂ oder Hartmetalle, gesinterte Carbid Hartmetalle wie z.B. Cobalt-oder Nickel-gebundenes Wolframcarbid oder Titancarbid sowie glaskermische Werkstoffe wie beispielsweise Zerodur^{®} oder Pyrex^{®} in Betracht. Zu den besonderen Merkmalen von Zerodur zählt eine äußerst geringen Ausdehnungskoeffizient, gute Materialhomogenität, chemische Beständigkeit, Langzeitstabilität sowie kaum schwankende mechanische Eigenschaften. E-Modul von Zerodur liegt bei Raumtemperatur in Bereich von ca. 90 GPa. Das E-Modul von Si₃N₄ liegt in Bereich von 250 GPa, dasjenige von Siliziumcarbid (SiC) bei ca 400 GPa und dasjenige von SiO₂ in Bereich von ca. 70 GPa. Zerodur^{®} ist ein glaskeramischer Werkstoff der Schott AG. Der Einsatz von Glaskeramischen Werkstoffen wie Zerodur^{®} hat folgenden Vorteil: Messysteme agieren in Auflösungsbereichen von weniger als 1µm. Der Thermische Ausdehnungskoeffizient bedingt, dass bereits kleine Temperaturschwankungen Messergebnisse signifikant verfälschen können. Diamant bietet hier den Vorteil eines sehr kleinen Thermischen Ausdehnungskoeffizienten im Bereich von etwa 1·10⁻⁶/K. Die meisten keramischen Werkstoffe besitzen jedoch thermische Ausdehnungskoeffizienten im Bereich von 3-10·10⁻⁶/K. Zerodur hingegen besitzt im praktisch relevanten Temperaturbereich einen verschwindend geringen thermischen Ausdehnungskoeffizienten. Glaskeramiken besitzen jedoch keinen hohen Widerstand gegen Abrasionsverschleiss und sind mechanisch nicht besonders belastbar (geringes Emodul, geringe Biegebruchspannung). Durch das Aufbringen der nanokristallienen Diamantschicht kann dieser Nachteil aber behoben werden und die thermischen Eigenschaften der Glaskeramik mit den herausragenden mechanischen und tribologischen Eigenschaften der Diamantschicht kombiniert werden.

Die Erfindung umfasst somit bevorzugt Ausführungsformen, bei denen der Prüfkörper aus einem Vollmaterial (Substrat), wie vorstehend beschrieben, gebildet ist und die eine feinkristalline Diamantschicht, wie vorstehend beschrieben, ausgebildet ist.

Besonders bevorzugte Ausführungsformen sehen vor, dass beispielsweise zwischen der Oberfläche des Prüfkörpers und der feinkristallinen Diamantschicht mindestens eine Haftvermittlerschicht, bevorzugt aus Siliziumkarbid, Siliziumnitrid, Wolfram, Titan oder Silizium angeordnet ist. Diese Haftvermittlerschicht erhöht dabei die Stärke des mechanischen Verbunds zwischen dem Kugelmaterial und feinkristalliner Diamantschicht.

Die Erfindung umfasst auch Ausführungsformen bei denen die feinkristalline Diamantschicht noch zusätzlich dotiert ist, z. B. mit Stickstoff, NH₃ und/oder Bor. Dadurch können auch leitfähige Diamantschichten realisiert werden. Dies ermöglicht z.B. die Detektierung eines Berührungskontaktes mit elektrisch leitfähigen Messobjekten.

In Bezug auf die Ausbildung des Prüfkörpers umfasst die Erfindung alle bisher im Stand der Technik bekannten Prüfkörper. Als Beispiele sind hier zu nennen kugelförmige Prüfkörper, Prüfkörper in Scheibenform, Prüfkörper in Zylinderform, Prüfkörper in Würfelform und Prüfkörper in Stiftform. Die Ausbildung des Prüfkörpers richtet sich nach den entsprechenden Anwendungsfall.

Die Erfindung umfasst weiterhin eine Kugel aus einem Vollmaterial mit einer die Kugeloberfläche mind. teilweise umhüllenden kristallinen Diamantschicht, wobei die Diamantschicht eine feinkristalline Diamantschicht wie vorstehend beim Prüfkörper ausführlich beschrieben ist. Die Diamantschicht der Kugel, die die Kugeloberfläche mind. teilweise bedecken kann, weist eine Dicken von 0,2 mm bis 100 mm auf, wobei die Diamantschicht eine feinkristalline Diamantstruktur besitzt und die kristallinen Domänen eine mittlere Korngröße von d₅₀ < 100 nm aufweisen. Die kristalline Diamantschicht die auf der Kugeloberfläche mind. teilweise aufgebracht ist, besitzt eine Oberflächenrauhigkeit von RMS < 50 nm, eine Biegebruchspannung > 2 GPA sowie ein E-Modul von < 850 GPA (unabhängiger Anspruch 13). Bevorzugt liegt die Dicke der nanokristallinen Diamantschicht für die Kugel im Bereich von 5 mm bis 10 mm und die kristallinen Domänen weisen eine mittlere Korngröße von d₅₀ < 50 nm, besonders bevorzugt von d₅₀ < 10 nm auf. Bevorzugte Werte für die Oberflächenrauhigkeit in RMS sind < 10 nm, besonders bevorzugt < 2 nm. Bevorzugte Bereiche für die Biegespannung sind > 4 GPA und für das E-Modul < 700 GPA. Auch die weiter bereits für den Prüfkörper beschriebenen Eigenschaften treffen auch für die Kugel aus einem Vollmaterial zu. Dies gilt sowohl für die Materialauswahl wie auch für die weiteren physikalischen Eigenschaften der Diamantschicht und des Materials für die Kugel.

Bevorzugte Anwendungen für eine derartige Kugel sind Kugellager.

Die Erfindung wird nachfolgend anhand eines Herstellungsbeispiels für einen kugelförmigen Prüfkörper näher beschrieben.

### 1. Herstellung von Aufnahmebohrungen in die Kugel mittels Laser

Hierzu werden mittels Laser Löcher bis maximal zur Mitte der Kugel eingebracht. Der Durchmesser richtet sich nach dem Durchmesser des Aufnahmedorns. Das Loch kann dabei auch für die Fixierung der Kugel im Reaktor sowie für die Manipulation während der Reinigung und Vorbehandlung verwendet werden.

### 2. Reinigung der Kugeloberfläche

Dazu wird eine chemische Grundreinigung durchgeführt. Dies ist angelehnt an die Reinigungskette der Halbleitersiliziumverdickung und besteht im einfachsten Falle aus einer organischen Reinigung mittels Aceton und Isopropanol. Je nach verwendetem Substratmaterial und Verschmutzung können auch stärkere Reinigungslösungen, wie z.B. Schwefelsäure, Salzsäure, Peroxid oder ammoniakhaltige Reinigungsmedien zum Einsatz kommen. Teilweise kann die Reinigung auch dazu genutzt werden, die Substratoberfläche gezielt im Nanometerbereich aufzurauen. Dieser Effekt ermöglicht eine mechanische Verzahnung zwischen dem Substrat und der anschließend aufzubringenden Diamantschicht.

### 3. Nukleation

Nach der Reinigung des Kugeloberfläche erfolgt dann eine Nukleation des Trägermaterials durch das Aufbringen von kohlenstoffhaltigen Edukten zur Bildung von Diamantkeimen, bzw. durch das Aufbringen feinkristallinen Diamantimpfkristallen und im Anschluss daran erfolgt ein Aufwachsen der Diamantschicht mittels einer Gasphasenabscheidung, z.B. durch Hot Filament-oder Plasma-gestützte Verfahren.

Wichtig ist, dass eine möglichst hohe Keimdichte von Diamantimpfkristallen auf der Substratoberfläche erreicht wird und dass dabei die Agglomeration von Impfkristallen vermieden wird. Gute Keimdichten liegen im Bereich von >10¹¹cm⁻², bevorzugt im Bereich >10¹²cm⁻². Ist die Keimdichte zu gering, schließt sich die Diamantschicht erst nach einigen 100nm und bildet Einschlüsse (Porosität). Ferner ist dadurch die Haftung zum Substrat nicht mehr sichergestellt.

Vorteilhafterweise wird die Substrattemperatur in der Anfangsphase der Beschichtung so hoch gewählt, dass sich zwischen den Diamantkeimen bzw. der Diamantschicht und dem Substratwerkstoff chemische Bindungen bilden können. Diese sind bei Silziumhaltigen Substratmaterialien beispielsweise kovalente Si-C Bindungen und formieren sich ab einer Substrattemperatur von etwa >750°C. Die chemische Bindung der Diamantschicht an das Substrat erhöht die Haftung und damit die Belastbarkeit des Interfaces.

Eine exemplarische Verfahrensführung zur Herstellung der feinkristallinen Diamantschicht ist nachfolgend angegeben:
Die feinkristallinen Diamantschichten werden z.B. mittels eines "Heißdraht-CVD-Verfahrens" hergestellt. Bei diesem Verfahren wird in einer Vakuumkammer mittels heißer Drähte, z.B. Wolframdrähte, eine Gasphase bestehend aus z.B. 1 bis 5 Vol.-% CH₄ und 95 bis 99 Vol.-% Wasserstoff aktiviert. Die Drahttemperatur liegt beispielsweise in einem Bereich von 1.800°C bis 2.400°C. Bei einem Abstand zwischen dem Substrat und den Drähten von 1 cm bis 5 cm wird dabei eine Substrattemperatur von 600 °C bis 900 °C eingestellt. Der Druck der Gasatmosphäre liegt zwischen 3 mbar und 30 mbar. Dabei erfolgt eine Abscheidung der feinkristallinen Diamantschicht auf dem Substrat.

In Bezug auf das Beschichtungsverfahren unterliegt die Erfindung selbstverständlich keinerlei Beschränkungen, so dass beim erfindungsgemäßen Verfahren eine an und für sich bekannte chemische Gasphasenabscheidung (CVD), bevorzugt eine Hot Filamentabscheidung, erfolgen kann.

### 4. Optional - Politur der Diamantoberfläche

Sofern erforderlich, kann eine Politur der Diamantoberfläche mechanisch mittels Schleifverfahren oder mittels Plasmaverfahren durchgeführt werden. Vorteilhaft ist dabei die geringe Grundrauheit der Diamantschicht nach dem Wachstum, welche die Prozesszeiten und Kosten für die eventuelle Politur gering hält. Gegebenenfalls kann darauf sogar ganz vollständig verzichtet werden. Der Politur kann auch ein Läppprozess vorhergehen, der gröbere Unebenheiten und Fehler in der Rundheit egalisiert.

### 5. Aufbau und Verbindungstechnik

Die Verbindung des Schafts des Tasters mit der Kugel kann entweder mittels Lötverbindung, Klebverbindung oder durch eine andere Form der kraftschlüssigen Verbindung geschehen.

Alternativ kann auch vorgesehen sein, dass die den Prüfkörper bildende Kugel über eine Rastverbindung mit dem Schaft verbunden ist. Unter Rastverbindung wird jede Verbindung von Kugel und Schaft verstanden, die mittels Kraft- und/oder Formschluss wirkt. Dazu kann bspw. in die Kugel ein Loch eingebracht werden und im Schaft ist ein entsprechender Dorn vorhanden, der dann form- und/oder kraftschlüssig in das Loch der Kugel eingreift. Dadurch kann ein sicherer Halt der Kugel mit dem Schaft gewährleistet werden.

Üblicherweise werden Diamantkugeln mittels einer Lötverbindung mit dem Schaft verbunden. Da Stahl und Diamant bislang nicht durch Löten verbunden werden können, kommt als Gegenstück ein Hartmetallschaft zum Einsatz. Um die Kugel sicher zu fixieren muss dem Hartmetallschaft stirnseitig eine Kalotte angeschliffen werden in die das Kugelsegment eingelötet wird. Im Vergleich zu einem Schaft aus Stahl sind der Hartmetallschaft und die Lötverbindung mit hohen Kosten verbunden. Aus diesem Grund wird vorgeschlagen, die Kugel vor der Beschichtung mittels Laser mit einem Loch zu versehen. Dieses kann einerseits zur Fixierung der Kugel während der Vorbehandlung und Diamantbeschichtung genutzt werden, andererseits kann sie nach der Beschichtung auch für die Verbindung von Kugel und Schaft genutzt werden. Der Schaft, vorzugsweise aus Stahl, wird dabei so hergestellt, dass ein Dorn angedreht ist welcher in die Bohrung der Kugel eingreift. Ein seitliches Verrutschen der Kugel ist dadurch unmöglich. Die Verbindung wird anschließend mit Klebstoff fixiert. Das anschleifen einer Kalotte entfällt durch die Verwendung des Dorns ebenfalls. Das Material des Schaftes des Tasters kann dabei, wie aus dem Stand der Technik bekannt, aus einem Hartmetall bestehen oder aus Stahl.

Ein Taster der wie vorstehend beschrieben, eine Kugel aufweist, hat noch weitere Vorteile:
Dadurch das der Prüfkörper in Form einer Kugel mit einer wie vorstehend beschriebenen feinkristallinen Diamantschicht umhüllt ist, ergibt sich noch der weitere Vorteil, dass durch den isotropen Aufbau und die extrem kleine Oberflächenrauheit RMS nur geringe Abweichungen von der idealen Kugeloberfläche vorliegen. Auch dadurch werden Messfehler reduziert. Bevorzugt sind dabei die relativen Abweichungen von der idealen Kugeloberfläche, bezogen auf den Kugeldurchmesser an den potentiellen Kontaktstellen, < 5 x 10 ⁻⁴ bevorzugt < 5 × 10 ⁻⁵ und ganz besonders bevorzugt < 5 × 10⁻⁶.

Die Erfindung wird nachfolgend anhand von Figuren näher erläutert.
Figur 1 zeigt dabei einen Schnitt durch eine mikrokristalline Diamantschicht (1a) Standes der Technik, sowie eine feinkristalline Diamantschicht (1b) und eine feinkristalline Diamantschicht (1c) nach der Erfindung.
Figur 2 zeigt in schematischer Darstellung einen Taster mit einer Kugel als Prüfkörper.
Figur 3 zeigt die Bestimmung der relativen Abweichung von der Idealkugeloberfläche.
Die Figuren 4 bis 6 zeigen spezielle Geometrien von Prüfkörpern und Figur 7 die Arbeitsweise von ausgewählten Prüfkörpern.
Figur 8 zeigt die Verbindungsmöglichkeiten des Prüfkörpers mit dem Schaft.

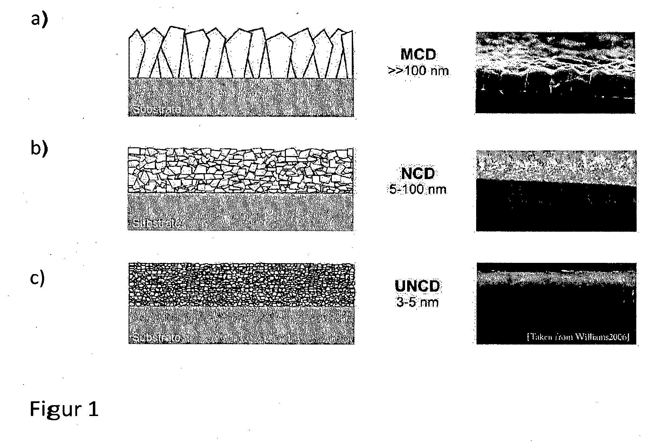

Figur 1 zeigt im Vergleich in der Figurenfolge 1a bis 1c sehr anschaulich, wie sich die Änderung der Korngrößenverteilung auf die kristalline Diamantschicht auswirkt. Diamantschichten mit einer Korngröße > 100 nm (mikrokristalline Diamantschicht, MCD) weisen relativ lange Korngrenzen auf. Dadurch kommt es zwangsläufig bei einer hohen mechanischen Beanspruchung zu einer Deformation bzw. zu einer Delamination.

Im Gegensatz hierzu weisen die feinkristallinen Diamantschicht, wie sie bei der erfindungsgemäßen Kugel eingesetzt werden (NCD 5 bis 100 nm sowie UNCD 3 - 5 nm) kleine Korngrößen auf, so dass eine im Wesentlichen homogene Verteilung der Kristallite erreicht wird. Dadurch werden nicht nur isotrope Eigenschaften der Diamantschicht realisiert, sondern die Diamantschicht weist auch eine kleines E-Modul und eine größere Bruchspannung auf. Dies führt im Ergebnis dazu, dass eine Kugel mit derartiger Diamantschicht wesentlich höheren Belastungen, auch Punktbelastungen, ausgesetzt werden kann, wie dies im Stand der Technik bekannt ist.

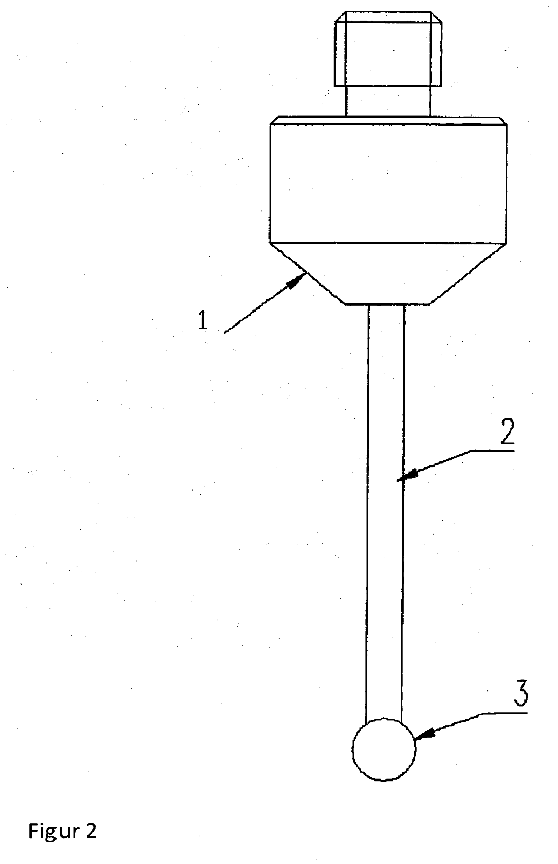

Figur 2 zeigt schematisch im Schnitt einen Taster 4. Der Taster 4 so wie er im Ausführungsbeispiel nach der Figur 2 dargestellt ist, besteht aus einem Grundkörper 1 einem Hartmetall Schaft 2 und einem Prüfköper 3. Der Prüfkörper 3 ist aus Si₃N₄ gebildet und besitzt eine feinkristalline Diamantschicht wie vorstehend beschrieben (nicht abgebildet). Der Taster 4 ist dabei insbesondere für das geometrische Messen von Bauteilen aus harten Werkstoffen oder Bauteilen aus hartbeschichteten Werkstoffen mit Koordinaten Messgeräten (KMG) geeignet. Der Vorteil des erfindungsgemäßen Taster ist darin zu sehen, dass die Messgenauigkeit gegenüber den Tastern des Standes der Technik erhöht worden ist, und das es zu keinen Delaminationen der aufgebrachten Diamantschichten kommt.

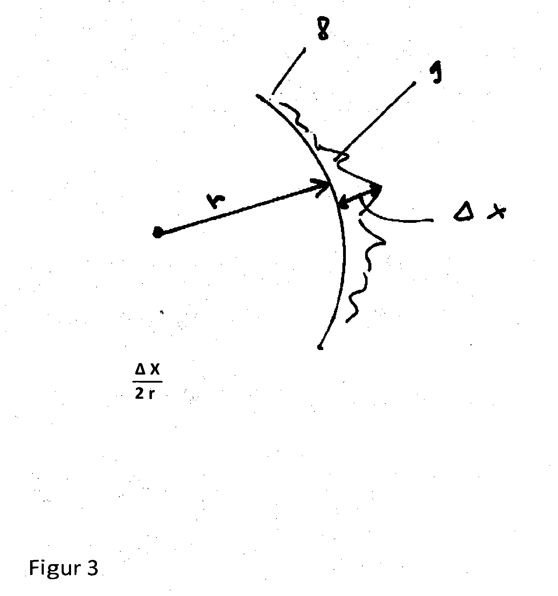

In Figur 3 ist Ausschnittsweise eine Kugeloberfläche 8 dargestellt, auf der die feinkristalline Diamantschicht aufgebracht ist. Die Figur 3 zeigt dabei eine vergrößerte Darstellung. Gemäß der Erfindung ist ja vorgesehen, dass die Kugeloberfläche eine relative Abweichung von der idealen Kugeloberfläche, bezogen auf den Kugeldurchmesser mindestens an den potentiellen Kontaktstellen von >5×10⁻⁴ bevorzugt > 5×10⁻⁵ und ganz besonders bevorzugt >5×10⁻⁶ aufweist. Die relative Abweichung von der idealen Kugeloberfläche 8 wird wie in Figur 3 gezeigt bestimmt, indem die größte Abweichung der feinkristallinen Diamantschicht 9 von der idealen Kugeloberfläche 8 mit Δx bezeichnet wird, und durch den Durchmesser (2xr) geteilt wird. Die feinkristalline Diamantschicht der Erfindung zeichnet sich somit dadurch aus, dass sie eine nahezu ideale Kugeloberfläche realisiert, sodass dann auch die damit erzielbaren Eigenschaften in Bezug auf den Taster als optimal zu betrachten sind.

Die Kugel kann dabei einen Kugeldurchmesser, wie im Stand der Technik bekannt von 0,1 bis 50mm, bevorzugt von 0,1 bis 10 mm und besonders bevorzugt von 0,3 bis 5 mm aufweisen.

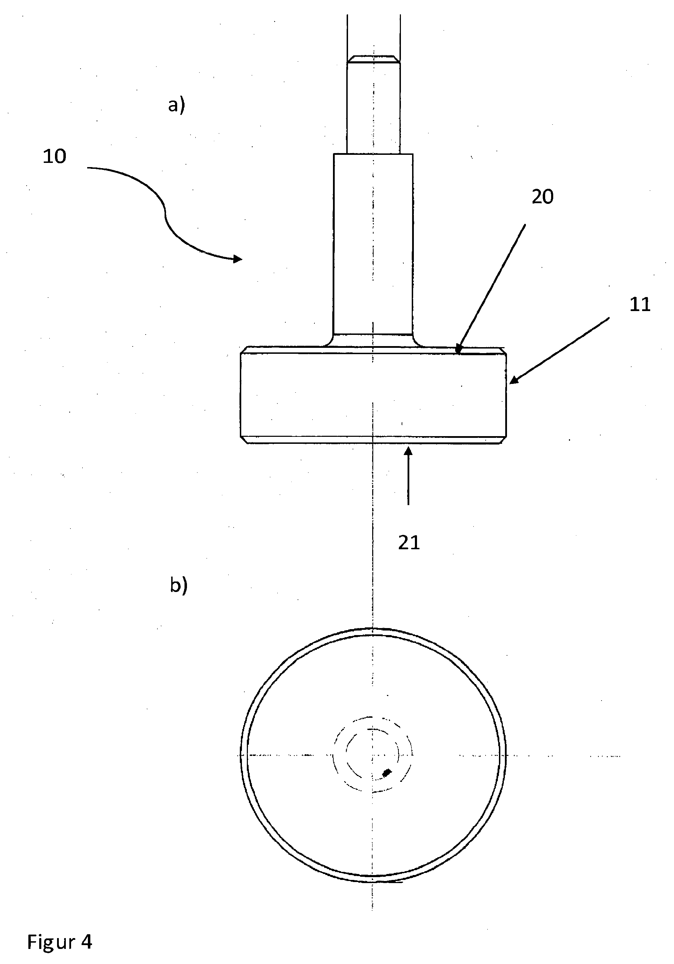

Figur 4 zeigt nun eine Ausführungsform, bei der der Prüfkörper 10 als Scheibe ausgebildet ist. Dies wird durch die Figur 4b verdeutlicht. In diesem Falle ist dann die feinkristalline Diamantschicht mind. an der Seitenfläche 11 und/oder auf der Grundfläche 21 der Scheibe aufgebracht. Mit 21 ist eine Phase des Prüfkörpers 10 bezeichnet. Der Prüfkörper selbst kann, wie vorstehend schon bei der Kugel 3 beschrieben, aus den dort genannten Materialien bestehen. Der Prüfkörper 10 ist dann in üblicherweise wie schon bei dem Taster mit der Kugel gezeigt, mit einem Schaft und einem Grundkörper verbunden.

Der Scheibentaster, wie in der Figur 4a und 4b dargestellt, wird zum Messen von Aussparungen und Einstichen verwendet. Das Messen mit einer einfachen Scheibe (runde Kanten) ist im Endeffekt dasselbe wie das Messen am oder um den Mittelpunkt einer großen Antastkugel. Da im vorliegenden Falle allerdings nur ein kleiner Teil der Kugeloberfläche für den Kontakt zur Verfügung steht, ist es wichtig, dass die Scheiben einer sorgfältigen Winkelausrichtung unterzogen werden, um den korrekten Kontakt der Scheibenoberfläche mit dem zu messenden Merkmal sicher zu stellen.

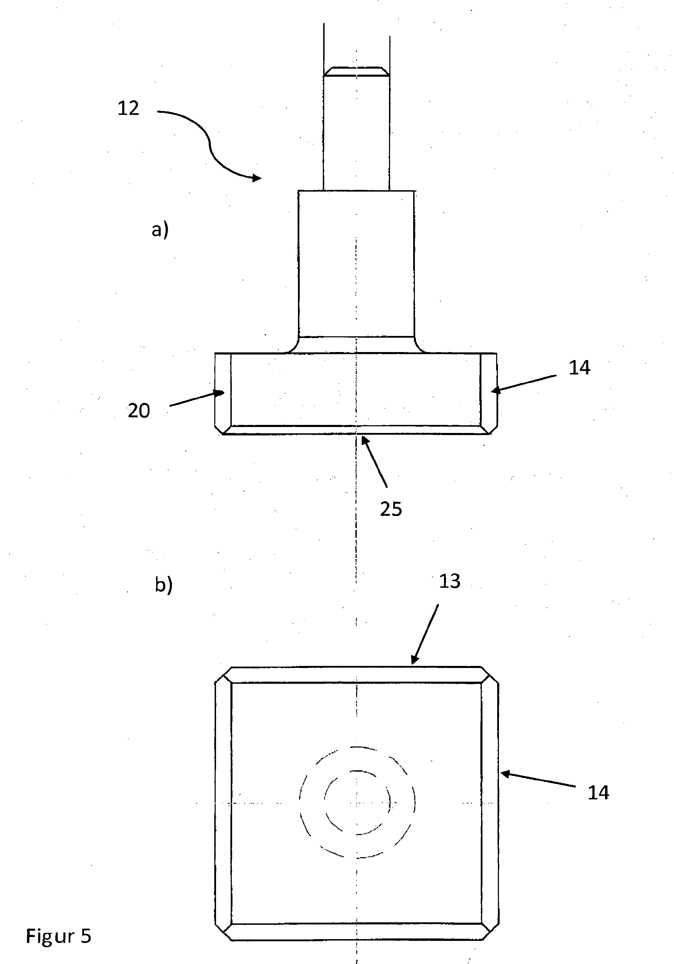

In Figur 5 ist eine weitere Ausbildung eines Prüfkörpers 12 in Form eines Würfels gezeigt. Die Figur 4a zeigt dabei einen Schnitt durch den würfelförmigen Taster, wohingegen die Figur 4b eine Draufsicht darstellt. Beim würfelförmigen Taster können dabei die Seiten 13, 14 und/oder 25 mit derfeinkristallinen Diamantschicht je nach Messproblem versehen sein. Mit 20 ist wieder die Phase bezeichnet.

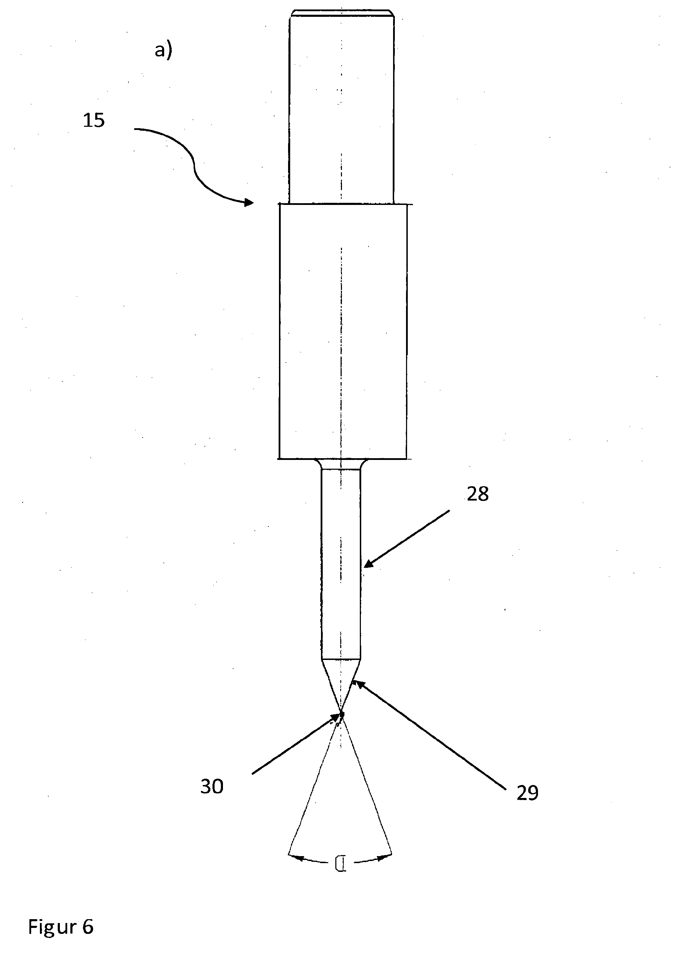

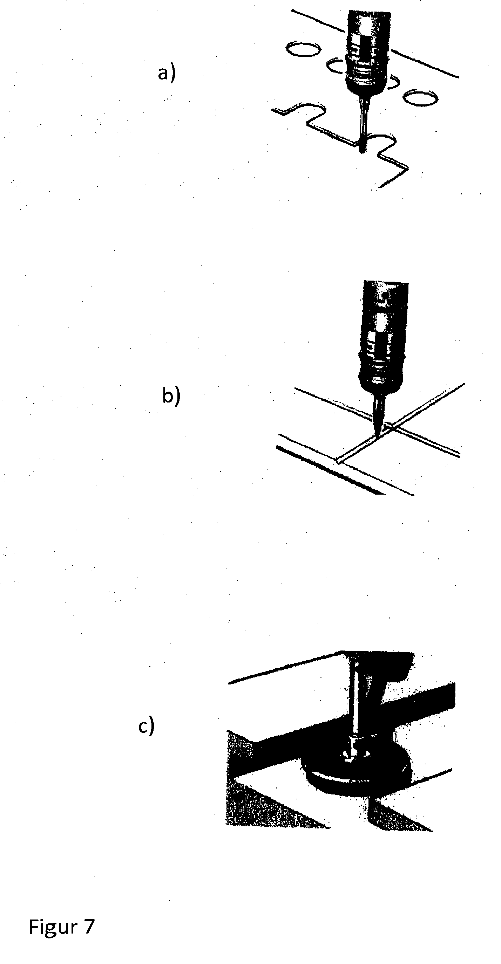

Die Figur 6 zeigt eine weitere Ausführungsform einer Prüfkörpergeometrie. Der Taster ist hierbei stiftförmig ausgebildet. Die Diamantschicht kann dabei nur auf der Mantelfläche 29, auf der Spitze 30 selbst und/oder auf den zylindrischen Stift 28 aufgebracht sein. Derartige stiftförmige Taster 15 können z.B. als Punkttastereinsätze verwendet werden. Die Verwendung von Punkttastereinsätzen mit abgerundeter Spitze ermöglicht ein genaues Kalibrieren und Messen von Merkmalen und kann auch zur Festlegung der genauen Position sehr kleiner Löcher genutzt werden. Zur Funktionsweise wird auch auf die Figur 7 verwiesen.

Figur 7 zeigt nun die Arbeitsweise von drei verschiedenen Tastereinsätzen.

So stellt die Figur 7a die Arbeitsweise eines zylindrischen Tastereinsatzes dar. Derartige Tastereinsätze werden für das Messen von Bohrungen in dünnen Materialien verwendet. Zusätzlich lassen sich verschiedene Gewindemerkmale messen und die Mittelpunkte von Gewindebohrungen ermitteln.

Der Taster der in Figur 7b dargestellt ist, ist ein sog. Punkttastereinsatz, wie er vorstehend schon bei der Figur 6 beschrieben worden ist. Diese Tastereinsätze sind insbesondere für das Überprüfen von Gewindeformen, markierten Punkten und angerissenen Linien konzipiert. Die Verwendung von derartigen Tastereinsätzen, die eine abgerundete Spitze aufweisen, ermöglicht somit wie vorstehend schon beschrieben, ein genaues Kalibrieren und Messen von Merkmalen und kann auch zur Festlegung der genauen Position von kleinen Löchern genutzt werden.

In Figur 7c ist ein sphärischer Scheibentaster dargestellt (siehe auch Figur 4). Derartige Scheibentaster, die ja im Endeffekt als dünne Scheibe einer großen Kugel zu verstehen sind, werden zum Messen von Aussparungen und Einstichen verwendet.

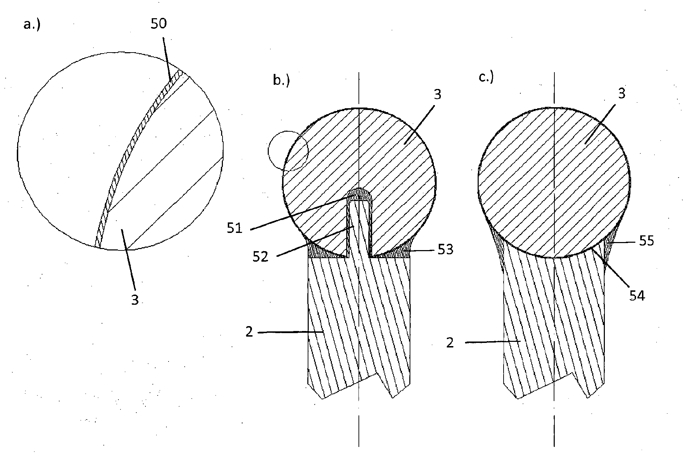

Figur 8 zeigt nun die Verbindungsmöglichkeiten zum Verbinden des Prüferkörpers 3 mit dem Schaft 2. Figur 8a zeigt in vergrößerter Darstellung einen Ausschnitt aus dem Prüfkörper der Kugel 3. Das Material des Prüfkörpers 3 kann aus Silicium, Si₃N₄, SiC, SiO₂, Hartmetall, Zerodur oder Pyrex ausgewählt sein. Im Beispielsfall nach der Figur 8a ist das Kernmaterial des Prüfkörpers-Si. Auf dem Kernmaterial des Prüferkörpers 3 ist die Diamantschicht 50 aufgebracht. In Figur 8b ist nun eine Verbindungsmöglichkeit gezeigt, wie der Prüfkörper 3 mit dem Schaft 2 verbunden sein kann. Bei dieser Ausführungsform greift ein Stahlstift 52, der mit dem Schaft des Prüfkörpers 2 verbunden ist, in eine korrespondierende Ausnehmung 51 in der Kugel 3 ein. Die Verbindung des Stahlstiftes 42 kann dabei entweder kraftschlüssig erfolgen oder aber die Verbindung kann durch einen zusätzlichen Klebstoff 53 hergestellt werden. Bei der Ausführungsform nach Figur 8c wird die Verbindung des Prüfkörpers 3 mit dem Schaft dadurch bewerkstelligt, dass die stirnseitige Oberfläche des Schaftes 2 in Form einer Kalotte 54 ausgebildet ist. Die stirnseitige Oberfläche des Schaftes 2 kann dazu entsprechend angeschliffen werden, wobei darauf geachtet werden muss, dass die Ausbildung der Kalotte sich so verhält, dass sie korrespondierend zum Prüfkörper 3 ausgebildet wird. Zusätzlich ist dann noch eine Klebstoffverbindung 55 vorgesehen.

Die beiden in der Figur 8 dargestellten Verbindungsmöglichkeiten des Prüfkörpers 3 mit dem Schaft 2 sind nur beispielhaft, stellen aber die bevorzugten Ausführungsformen dar.

## Patentansprüche

1. Taster, für das vermessen von Bauteilen, umfassend einen mit einem Grundkörper verbundenen Prüfkörper, **dadurch gekennzeichnet dass** mind. diejenige Oberfläche des Prüfkörpers die mit dem zu vermessenden Bauteil in Kontakt bringbar ist, mit einer kristallinen Diamantschicht versehen ist, mit der Maßgabe, dass die kristalline Diamantschicht,
a) eine Dicke von 0,2 µm bis 100 µm, aufweist, wobei die Diamantschicht eine feinkristalline Diamantstruktur besitzt und die kristallinen Domänen eine mittlere Korngröße von d₅₀ ≤ 100nm aufweisen und,
b) eine Oberflächenrauheit von RMS < 50 nm besitzt und,
c) eine Biegebruchspannung von > 2 GPa sowie
d) ein E-Modul von < 850 GPa aufweist, wobei
das E-Modul in GPa der nanokristallinen Diamantschicht maximal um den Faktor 4 größer ist, als das E-Modul des Materials in GPa des Prüfkörpers.

2. Taster nach Anspruch 1, **dadurch gekennzeichnet, dass** die nanokristalline Diamantschicht,
a) eine Dicke von 5 µm bis 10 µm aufweist, wobei die kristallinen Domänen (a) ein mittlere Korngröße von d₅₀ < 50 nm bevorzugt d₅₀< 10 nm aufweisen, und
b) eine Oberflächenrauheit von RMS < 10 nm, bevorzugt RMS < 2 nm besitzt und
c) eine Biegebruchspannung von > 4 GPa sowie
d) ein E-Modul von < 700 GPa aufweist.

3. Taster nach Anspruch 1 oder 2, **dadurch gekennzeichnet, dass** die Diamantschicht, bevorzugt mit N₂, NH₃ und/oder B dotiert ist.

4. Taster nach einem der Ansprüche 1 bis 3, **dadurch gekennzeichnet, dass** das Material des Prüfkörpers aus Si, Si₃N₄, SiC, SiO₂, Hartmetall, Zerodur^{®} oder Pyrex^{®} ausgewählt ist.

5. Taster nach mindestens einem der Ansprüche 1-4, **dadurch gekennzeichnet, dass** das E-Modul in GPa der nanokristallinen Diamantschicht maximal um den Faktor 3, bevorzugt maximal um den Faktor 2 größer ist als das E-Modul in GPa des Materials des Prüfkörpers.

6. Taster nach mind. einem der Ansprüche 1 bis 5, **dadurch gekennzeichnet, dass** der Prüfkörper über einen Schaft mit dem Grundkörper verbunden ist.

7. Taster nach einem der Ansprüche 1 bis 6, **dadurch gekennzeichnet, dass** der Prüfkörper ein Kugelkörper mit einem Durchmesser von 0,1 bis 50 mm, bevorzugt 0,1 bis 10 mm, besonders bevorzugt 0,3 bis 5 mm ist, wobei die die Kugel umhüllende feinkristalline Diamantschicht die Kugeloberfläche mind, in den Bereichen umhüllt, die mit dem Prüfkörper in Kontakt bringbar ist.

8. Taster nach Anspruch 7, **dadurch gekennzeichnet, dass** die Kugeloberfläche eine relative Abweichung von der idealen Kugeloberfläche, bezogen auf den Kugeldurchmesser, an den potentiellen Kontaktstellen von < 5 × 10⁻⁴, bevorzugt < 5 x 10⁻⁵ und ganz besonders bevorzugt < 5 x 10⁻⁶ aufweist.

9. Taster nach einem der Ansprüche 1 bis 6, **dadurch gekennzeichnet, dass** der Prüfkörper eine Scheibe ist, dessen umlaufende Außenkante mit dem zu vermessenden Bauteil in Kontakt bringbar ist, wobei mind. die umlaufende Außenkante der Scheibe mit der feinkristallinen Diamantschicht versehen ist.

10. Taster nach einem der Ansprüche 1 bis 6, **dadurch gekennzeichnet, dass** der Prüfkörper ein Zylinder ist, dessen Außenmantel mit dem zu vermessenden Bauteil in Kontakt bringbar ist, wobei mind. der Außenmantel des Zylinders mit der feinkristallinen Diamantschicht versehen ist.

11. Taster nach einem der Ansprüche 1 bis 6, **dadurch gekennzeichnet, dass** der Prüfkörper stiftförmig mit einer abgerundeten Spitze ausgebildet ist, wobei die abgerundete Spitze des Stiftes mit den zu vermessendem Bauteil in Kontakt bringbar ist und wobei mind. die abgerundete Spitze des Stiftes mit der feinkristallinen Diamantschicht versehen ist.

12. Taster nach einem der Ansprüche 1 bis 6, **dadurch gekennzeichnet, dass** der Prüfkörper würfelförmig ausgebildet ist, und wobei die Seitenflächen des Würfels mit dem zu vermessenden Bauteil in Kontakt bringbar sind und wobei mind. die Außenflächen des Würfels mit der kristallinen Diamantschicht versehen sind.

## Claims

1. Sensing device to measure components, comprising a testing body connected to a base body, **characterised in that** at least the surface of the testing body which is able to be brought into contact with the component to be measured is provided with a crystalline diamond layer, provided that the crystalline diamond layer
a) has a thickness of 0.2µm to 100 µm, wherein the diamond layer has a fine crystalline diamond structure and the crystalline domains have an average particle size of d₅₀ ≤ 100nm and,
b) has a surface roughness of RMS < 50nm and,
c) has a transverse rupture stress of > 2GPa as well as
d) an E-modulus of < 850GPa, wherein
the E-modulus in GPa of the nanocrystalline diamond layer is greater than the E-modulus of the material in GPa of the testing body by a factor of 4.

2. Sensing device according to claim 1, **characterised in that** the nanocrystalline diamond layer,
a) has a thickness of 5µm to 10µm, wherein the crystalline domains (a) have an average particle size of d₅₀ < 50nm, preferably d₅₀ < 10nm, and
b) has a surface roughness of RMS < 10nm, preferably RMS < 2nm, and
c) has a transverse rupture stress of > 4GPa as well as
d) an E-modulus of < 700GPa.

3. Sensing device according to claim 1 or 2, **characterised in that** the diamond layer is preferably doped with N₂, NH₃ and/or B.

4. Sensing device according to one of claims 1 to 3, **characterised in that** the material of the testing body is selected from Si, Si₃N₄, SiC, SiO₂, carbide, Zerodur® or Pyrex®.

5. Sensing device according to at least one of claims 1 to 4, **characterised in that** the E-modulus in GPa of the nanocrystalline diamond layer is greater than the E-modulus in GPa of the material of the testing body by a maximum of a factor of 3, preferably by a maximum of a factor of 2.

6. Sensing device according to at least one of claims 1 to 5, **characterised in that** the testing body is connected to the base body via a shaft.

7. Sensing device according to one of claims 1 to 6, **characterised in that** the testing body is a spherical body having a diameter of 0.1 to 50mm, preferably 0.1 to 10mm, particularly preferably 0.3 to 5mm, wherein the fine crystalline diamond layer coating the sphere coats the spherical surface at least in the regions which are able to be brought into contact with the testing body.

8. Sensing device according to claim 7, **characterised in that** the spherical surface has a relative deviation from the ideal spherical surface, with regard to the spherical diameter, at the potential contact points of < 5 x 10⁻⁴, preferably < 5 x 10⁻⁵, and particularly preferably < 5 x 10⁻⁶.

9. Sensing device according to one of claims 1 to 6, **characterised in that** the testing body is a disc, the circumferential outer edge of which is able to be brought into contact with the component to be measured, wherein at least the circumferential outer edge of the disc is provided with the fine crystalline diamond layer.

10. Sensing device according to one of claims 1 to 6, **characterised in that** the test body is a cylinder, the outer shell of which is able to be brought into contact with the component to be measured, wherein at least the outer shell of the cylinder is provided with the fine crystalline diamond layer.

11. Sensing device according to one of claims 1 to 6, **characterised in that** the testing body is formed to be pin-shaped having a rounded tip, wherein the rounded tip of the pin is able to be brought into contact with the component to be measured and wherein at least the rounded tip of the pin is provided with the fine crystalline diamond layer.

12. Sensing device according to one of claims 1 to 6, **characterised in that** the testing body is formed to be cube-shaped, and wherein the side surfaces of the cube are able to be brought into contact with the component to be measured and wherein at least the outer surfaces of the cube are provided with the crystalline diamond layer.

## Revendications

1. Profilographe pour la mesure de composants, comprenant un palpeur relié à un corps de base, **caractérisé en ce que** la surface du palpeur qui peut être mise en contact avec le composant à mesurer est pourvue d'une couche diamantée cristalline, du moment que la couche diamantée cristalline
a) présente une épaisseur de 0,2 µm à 100 µm, la couche diamantée présentant une structure diamantée finement cristalline, et les domaines cristallins présentant une grosseur moyenne de grain d₅₀ ≤ 100 nm, et
b) possède une rugosité moyenne quadratique RMS < 50 nm,
c) présente une résistance à la rupture par flexion > 2 GPa, ainsi que
d) un module d'élasticité < 850 GPa,
le module d'élasticité en GPa de la couche diamantée nanocristalline étant au maximum d'un facteur 4 supérieur au module d'élasticité du matériau en GPa du palpeur.

2. Profilographe selon la revendication 1, **caractérisé en ce que** la couche diamantée nanocristalline présente
a) une épaisseur de 5 µm à 10 µm, les domaines cristallins (a) présentant une grosseur moyenne de grain d₅₀ < 50 nm, de préférence d₅₀ < 10 nm, et
b) une rugosité moyenne quadratique RMS < 10 nm, de préférence RMS < 2 nm, et
c) une résistance à la rupture par flexion > 4 GPa, ainsi que
d) un module d'élasticité < 700 GPa.

3. Profilographe selon la revendication 1 ou 2, **caractérisé en ce que** la couche diamantée est dopée de préférence avec N₂, NH₃ et/ou B.

4. Profilographe selon l'une des revendications 1 à 3, **caractérisé en ce que** le matériau du palpeur est choisi parmi Si, Si₃N₄, SiC, SiO₂, un métal dur, le Zerodur® ou le Pyrex®.

5. Profilographe selon au moins l'une des revendications 1 à 4, **caractérisé en ce que** le module d'élasticité en GPa de la couche diamantée nanocristalline est au maximum d'un facteur 3, de préférence au maximum d'un facteur 2 supérieur au module d'élasticité en GPa du matériau du palpeur.

6. Profilographe selon au moins l'une des revendications 1 à 5, **caractérisé en ce que** le palpeur est relié au corps de base par l'intermédiaire d'un arbre.

7. Profilographe selon l'une des revendications 1 à 6, **caractérisé en ce que** le palpeur est une bille ayant un diamètre de 0,1 à 50 mm, de préférence de 0,1 à 10 mm, d'une manière particulièrement préférée de 0,3 à 5 mm, la couche diamantée finement cristalline entourant la bille entoure la surface de la bille au moins dans les zones qui peuvent être mises en contact avec le palpeur.

8. Profilographe selon la revendication 7, **caractérisé en ce que** la surface de la bille présente un écart relatif, par rapport à une surface sphérique idéale, rapporté au diamètre de la bille, au niveau des points de contact potentiels, de < 5.10⁻⁴, de préférence < 5.10⁻⁵ et d'une manière tout particulièrement préférée < 5.10⁻⁶.

9. Profilographe selon l'une des revendications 1 à 6, **caractérisé en ce que** le palpeur est un disque, dont l'arête extérieure périphérique peut être mise en contact avec le composant à mesurer, au moins l'arête extérieure périphérique du disque étant pourvue de la couche diamantée finement cristalline.

10. Profilographe selon l'une des revendications 1 à 6, **caractérisé en ce que** le palpeur est un cylindre dont la surface latérale peut être mise en contact avec le composant à mesurer, au moins la surface latérale du cylindre étant pourvue de la couche diamantée finement cristalline.

11. Profilographe selon l'une des revendications 1 à 6, **caractérisé en ce que** le palpeur est configuré en forme de pointe, avec une extrémité arrondie, l'extrémité arrondie de la pointe pouvant être mise en contact avec le composant à mesurer, et au moins l'extrémité arrondie de la pointe étant pourvue de la couche diamantée finement cristalline.

12. Profilographe selon l'une des revendications 1 à 6, **caractérisé en ce que** le palpeur est configuré sous la forme d'un cube, les faces latérales du cube pouvant être mises en contact avec le composant à mesurer, et au moins les surfaces extérieures du cube étant pourvues de la couche diamantée cristalline.
